# EUROPEAN PATENT SPECIFICATION

(11) **EP 0 758 154 B1**
(45) Date of publication and mention of the grant of the patent: **17.05.2000**
(21) Application number: 96112720.6
(22) Date of filing: 07.08.1996
(51) Int. Cl.: H02K 5/128

(54) **Canned motor**
Spaltrohrmotor
Moteur à manchon d'entrefer

(30) Priority: 08.08.1995 IT VI950132
(43) Date of publication of application: 12.02.1997
(73) Proprietor: EBARA CORPORATION, Ohta-ku, Tokyo (JP); EBARA DENSAN LTD., Tokyo (JP)
(72) Inventor: Kishi, Masahiko, c/o Ebara Densan, Ltd., Ohta-ku, Tokyo (JP); Kojima, Yoshitaka, c/o Ebara Densan, Ltd., Ohta-ku, Tokyo (JP); D'Amico, Sebastiano, 36100 Vicenza (IT); Fongaro, Andrea, 36050 Sovizzo, Vicenza (IT)
(74) Representative: Wagner, Karl H., Dipl.-Ing.

(56) References cited:
- PATENT ABSTRACTS OF JAPAN vol. 008, no. 200 (E-266), 13 September 1984 & JP-A-59 089543 (HITACHI SEISAKUSHO KK), 23 May 1984,
- PATENT ABSTRACTS OF JAPAN vol. 007, no. 062 (E-164), 15 March 1983 & JP-A-57 208834 (MITSUBISHI DENKI KK), 22 December 1982,

## Description

### Background of the Invention

### Field of the Invention:

The present invention relates in general to electrically-driven motors, and relates in particular to a canned motor having a stator filled with a filler such as a polymeric resin.

### Technical Background of the Invention:

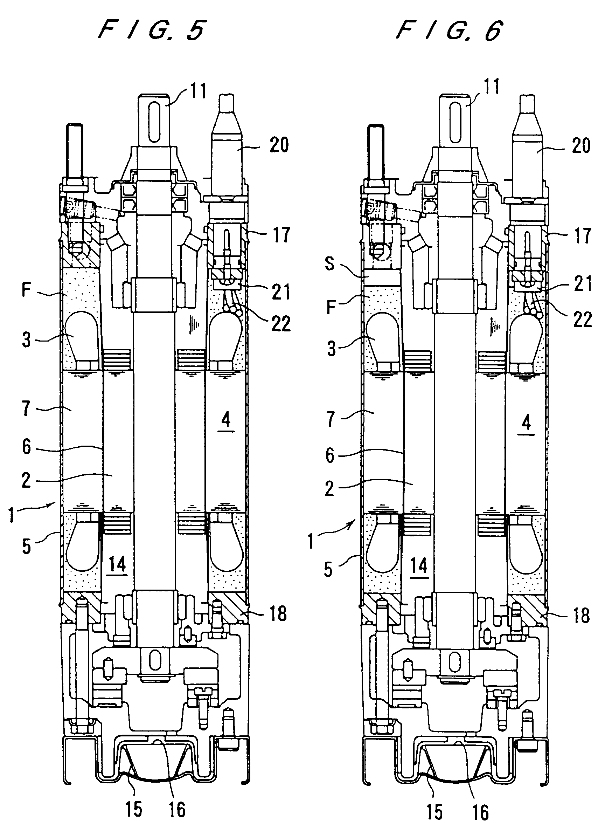

A conventional motor for use in pumps such as the one shown in Figure 5 achieves hermetic-sealing of the motor by having a stator 1 housed in a space called stator chamber 4 formed by a frame 5 and a stator can 6. The stator chamber 4 is filled with a filler F to improve heat dissipation from the stator coil 3 and/or to serve as a backing against deformation towards outer radial direction of the stator can 6 caused by high fluid pressure.

Generally, the coefficient of linear thermal expansion of the filler F is comparatively higher than that of the metals making up the frame 5 or the stator can 6, and consequently, when the filler F expands from the heat generated about the motor or by the motor itself, the structural components such as the frame 5 and the stator can 6 are subjected to stresses generated by thermal expansion. When the thermal stresses exceed the allowable strength limit of these structural components, permanent deformation can result. Especially, because the wall thickness of the stator can 6 is comparatively less than that of the frame 5, at certain temperatures, the wall of the stator can 6 can collapse inwardly towards the inner radius where there is no filler backing. Depending on the severity of the collapse, the resulting deformation may at times interfere with the rotating components of the motor such as the rotor 2.

To prevent the deformation towards the inner radius of the stator can 6, caused by the expansion of the filler F due to the heat generated by the operation of the motor, the conventional approach has been either to use a resin having a similar coefficient of expansion as that of the metal components or to provide a space S in the stator chamber 4 to function as air cushion, as shown in Figure 6.

However, the problem with this conventional approach is that those resins having an expansion coefficient close to that of metals contain a large amount of inorganic materials in the filler. Such a filler typically exhibits low fluidity when it is cast into the stator chamber 4, resulting in incomplete filling of the stator chamber 4. Further, those resins are custom formulated for each application, thus presenting an additional problem that the production operation becomes awkward to manage and expensive.

In the case of the method of using the space S in the stator chamber 4 as air cushion, there is an additional problem that the stator chamber 4 is a complex structure having the compartments divided vertically by a stator core 7. Such a structure may not present any problem for a resin with a high fluidity, but the solidified resins create a problem that one space S for the stator chamber 4 is not sufficient to absorb the expansion of the filler F. It becomes necessary to provide a space S for each of the filler compartments of the filler F.

In case of manufacturing such a stator 1, it is usual practice to place the stator 1 in an upright position to cast and harden the filler F therein. Therefore, unless highly specialized tools or processes are used, the spaces can be formed only within the upper end space of the stator chamber 4. On the other hand, if the stator 1 is placed horizontally for filling the resin, although spaces may be formed at both inner ends of the stator chamber 4, the core 7 and coil 3 become partially exposed, leading to local over heating in the motor during its operation.

Further, JP-A-57 208 834 shows filling the space between the can and the frame of a canned type submergible motor with a filling material and a liquid medium. Attention is also drawn to JP-A-59-89543, which shows a cushion material in direct contact with an inside cylinder and an end cover of a stator chamber for an underwater motor which is filled with a molding resin. The cushion material being provided over a region where the inside cylinder and the end cover are bonded together.

### Summary of the Invention

It is an object of the present invention to provide a canned motor having a simple structure for manufacturing to accommodate thermal expansion of the filler in the stator chamber so as to enable a reliable operation of the motor.

The object is achieved in a canned motor hermetically sealed in a casing comprising a rotor and a cylindrical stator chamber surrounding the rotor for housing a stator; wherein the stator chamber is provided with a filler material and at least one expansion absorber member for absorbing thermal expansion of the filler material so as to prevent the deformation of the stator chamber caused by thermal expansion of the filler material wherein said expansion absorber member is embedded in a middle region of said filler material. The expansion absorber member may be either elastic or non-elastic so long as the member is made of a material having appropriate compressibility and stiffness.

An aspect of invention is that the expansion absorber member is made of an elastic material.

Another aspect of the invention is that the elastic material is selected from a group consisting of a rubber exemplified by ethyl propylene rubber and silicone rubber, a polymeric resin and a foamed polymeric resin and a suitable combination thereof.

Another aspect of the invention is that the expansion absorber is embedded in a middle region of the filler material by placing the absorber member first before filling with the filler to produce a structure which is highly effective in absorbing the stress caused by the expansion of the filler material.

Another aspect of the invention is that the stator chamber is partly filled with a gaseous substance so as to form an air chamber for absorbing thermal expansion of the filler material.

Another aspect of the invention is that the expansion absorber member is made from a ring-shaped disc or a cylinder so as to select a suitable shape to fit the shape of the stator chamber.

Another aspect of the invention is that the expansion absorber member comprises a plurality of pieces dispersed in the filler material, thereby facilitating the production by having absorber members of a uniform shape and size prepared beforehand, so that a required amount of absorption can be accommodated by varying simply the number of the absorber members of the uniform shape and size.

Another aspect of the invention is that the expansion absorber member comprises spherical pieces, because the spherical shape can be produced readily to aid the production of the member and enables uniform distribution of the expansion absorber members while providing a large area of contact for high stress absorption due to thermal expansion of the filler material.

### Brief Explanation of the Drawings

Figure 1 shows a cross sectional view of a first embodiment of the canned motor of the present invention.

Figure 2 is a perspective view of some examples of the absorber members for use in the canned motor of the present invention.

Figure 3 is a cross sectional view of a second embodiment of the canned motor of the present invention.

Figure 4 is a cross sectional view of a stator in a third embodiment of the canned motor of the present invention.

Figure 5 is a cross sectional view of an example of the conventional canned motor.

Figure 6 is a cross sectional view of another example of the conventional canned motor.

### Preferred Embodiments

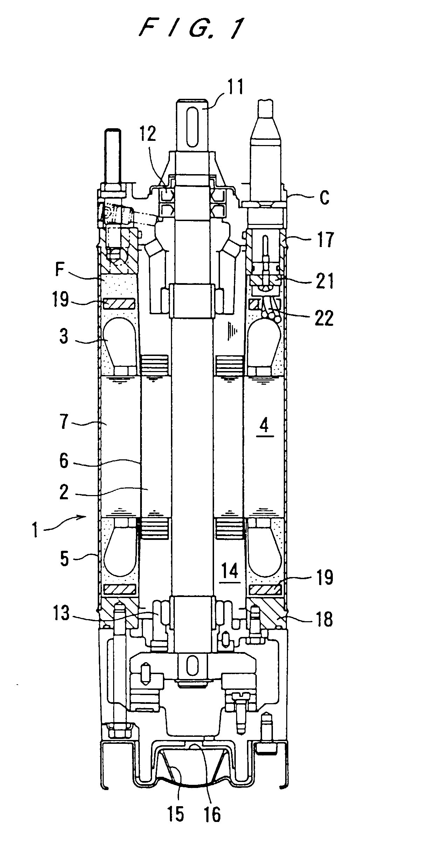

Figure 1 shows a cross sectional view of a first embodiment of the canned motor of the present invention for use with an immersion pump. The parts which are the same as those shown in Figures 5 and 6 are designated by the same reference numerals and their explanations are omitted. The canned motor is housed in a totally sealed cylindrical casing C, and in the center, a shaft member 11 having a rotor 2 attached on its circumferential periphery is supported by bearings 11, 12. A stator 1 is housed in a stator chamber 4 formed by a space surrounding the rotor 2. A space 14 disposed radially inward in a stator can 6 and including the shaft member 11, the rotor 2, bearings 12 and 13 is filled with a fluid medium for providing lubrication and cooling. The space 14 and the external environment are separated by a diaphragm 16 which is stretched across the lower part of the casing C with an elastic member 15, and functions as a pressure moderator to respond to the differential pressure between the inside and the outside of the canned motor.

The stator chamber 4 is formed by the surrounding members including a frame 5, the stator can 6 and the upper and lower side plates 17, 18, and houses a stator core 7 and a coil 3 wound thereon. The remaining spaces in the stator chamber 4 are filled with a filler F. The stator chamber 4 is divided vertically by the stator core 7 and the coil 3, and each space associated therewith has its own filler F which is provided with an expansion absorber member 19 (shortened to absorber member henceforth). The upper absorber member 19 is disposed above the upper side plate 17 and the lower absorber member 19 is disposed below the lower side plate 18.

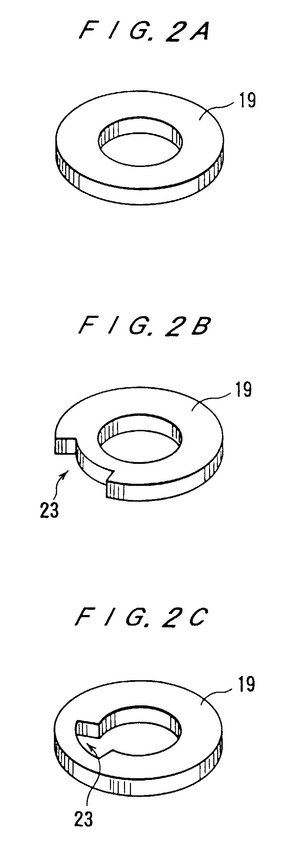

The absorber member 19 can be made of a suitable elastic material (for example various types of rubber), a polymeric resin material having a larger compressibility than the filler resin, or a foaming resin which generates bubbles while solidifying. It can also be made from a non-elastic material of a suitable compressibility. The absorber member 19 is made in a hollow disc or a hollow cylinder shape, as shown in Figure 2(a), whose outer diameter is smaller than the inner diameter of the frame 5 and whose inner diameter is larger than the outer diameter of the stator can 6. The volumetric size of the absorber member 19 is determined on the basis of the shrinkage of the material as well as the degree of absorption required to accommodate the expansion due to the temperature rise in the stator 1.

A terminal base 21 is provided at the upper side plate 17 for electrically connecting a source cable 21, and an absorber member 19 to be disposed in this location is provided with a cutout 23 for passing through a lead wire 22 extending from the terminal base 21 as shown in Figure 2(b). Depending on the location of the lead wire 22, the cutout 23 can be provided on the inward side of the absorber member as shown by type (c) in Figure 2.

When an immersion pump equipped with a canned motor of the present invention is placed in water, a hydrostatic pressure in accordance with the depth of immersion is applied to the diaphragm 16, leading to a corresponding increase in the internal pressure of the fluid in the space 14 surrounding the shaft member 11. The internal pressure pushes the stator can 6 outward, but the stator chamber 4 is filled with filler F made of resins and the like, and the stiffness of the absorber member 19 prevents severe deformation of the stator can 6.

When the motor in put into operation, a portion of the electrical energy is expended as heat resulting in temperature rise of the motor. When the coefficient of thermal expansion of the filler F is larger than that of the casing C or the filler temperature is higher than the surrounding temperature, the filler F expands thus resulting in an application of an outward stress to the casing C, in particular to the stator can 6. The absorber member 19 accommodates the expansion by deforming itself, thus absorbing the stress which would otherwise deform the stator can 6. The temperature of the fluid within the space 14 inside the stator can 6 also rises, but the pressure caused by this temperature rise is passed through to the outside environment, thus preventing the deformation of the stator can 6.

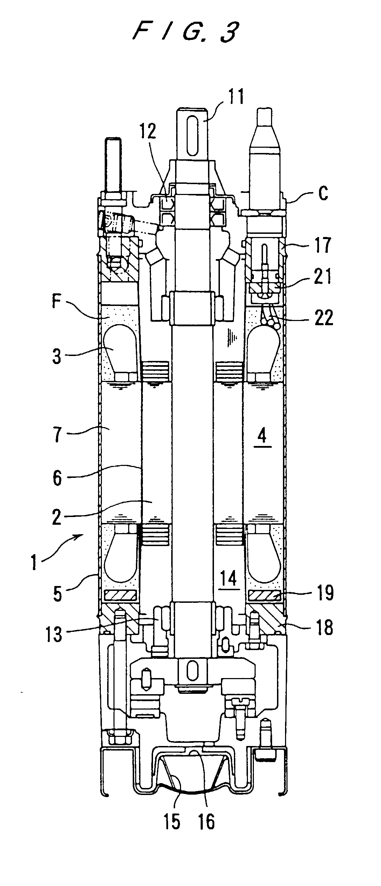

Figure 3 shows a second embodiment in which the absorber member is utilized in conjunction with the conventional air chamber (space) S. The air chamber S brings a low stiffness to the stator can 6 against the internal pressure of the casing C, however, when the pressure in the space 14 is relatively low, i.e., the pump is used in a relatively shallow depth of immersion, it is sufficiently strong to resist the stress of deformation caused by the hydrostatic pressure. Therefore, it is necessary to employ the absorber member 19 only on one region of the stator chamber 4, which contributes to lowering the costs for materials and manufacturing.

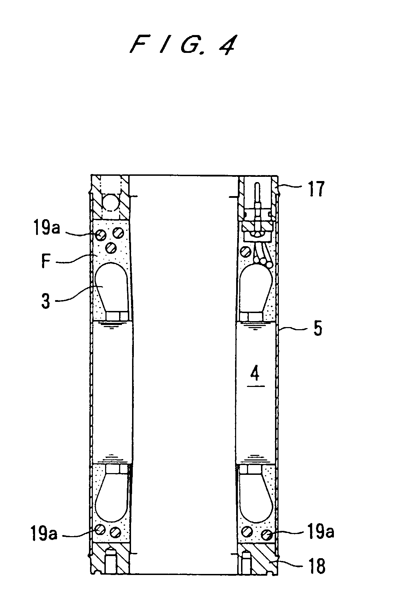

Figure 4 shows a third embodiment in which spherical absorber members 19a of small diameter are dispersed within the filler F. The size and the number of the absorber member 19a are determined on the basis of the size of the stator chamber 4 as well as the degree of expansion absorption required for the application. In this embodiment, spherical absorber members of a certain diameter are prepared beforehand, and the necessary number of absorber members is determined in accordance with the size of the spaces under consideration. By taking this approach, there is no need for preparing spherical absorber members of different diameters to be used for stator chambers of different sizes, and the manufacturing process is made simple and cost efficient. Further advantage is that because the absorber members are dispersed throughout the fluid, absorption effect can be achieved uniformly in all directions.

As explained above, by disposing expansion absorber members having suitable characteristics of compressibility and stiffness within the stator chamber, the structural rigidity of the stator chamber itself is maintained while absorbing the internal stresses generated by thermal expansion of the resin type filler. This action of the expansion absorber member prevents the transmission of internal stresses to structural components such as the stator can, and thereby, preventing the deformation of the stator can, within the allowable limits of the operational temperature of the canned motor, and the operational problem of mechanical interference between the stator can and the rotating members such as the rotor. Further, the need for preparing a special type of filler material having high viscosity is eliminated, thereby allowing the use of regular resins of high fluidity. These advantages are obtained in a simple and cost effective structure of the canned motor. The elastic nature of the materials used as expansion absorber provides resiliency required for reversible shape changes to accommodate thermal expansion when the motor becomes heated, and thermal contraction when the motor is cooled. Time-dependent degradation can be minimized by choosing the absorber material suitably to provide a durable sealed pump.

It is obvious that many variations and modifications of the absorber member and their placement can be made within the principle presented above that the mechanical stresses caused by thermal expansion of a filler material can be alleviated by providing an absorber material within a stator chamber in a suitable form and number.

## Claims

1. A canned motor hermetically sealed in a casing (c) comprising a rotor (2) and a cylindrical stator chamber (4) surrounding said rotor (2) for housing a stator (3, 7); wherein said stator chamber (4) is provided with a filler material (F) and at least one expansion absorber member (19) made of a compressible material for absorbing thermal expansion of said filler material (F) by deforming itself so as to prevent the deformation of said stator chamber (4) caused by thermal expansion of said filler material (F), wherein said expansion absorber member (19) is embedded in a middle region of said filler Material (F).

2. A canned motor as claimed in claim 1, wherein said expansion absorber member (19) is made of an elastic material.

3. A canned motor as claimed in claim 2, wherein said elastic material is selected from a group consisting of a rubber, a polymeric resin and a foamed polymeric resin and a combination thereof.

4. A canned motor as claimed in one of claims 1 to 3, wherein said stator chamber (4) is partly filled with a gaseous substance so as to form an air chamber for absorbing thermal expansion of said filler material (F).

5. A canned motor as claimed in one of claims 1 to 4, wherein said expansion absorber member (19) is selected from a group consisting of a ring-shaped disc and a cylinder.

6. A canned motor as claimed in one of claims 1 to 5, wherein said expansion absorber member (19) comprises a plurality of pieces dispersed in said filler material (F).

7. A canned motor as claimed in claim 7, wherein said expansion absorber member (19) comprises spherical pieces.

## Patentansprüche

1. Spaltrohrmotor bzw, gekapselter Motor, der hermetisch in einem Gehäuse (C) abgedichtet ist, der einen Rotor (2) und eine zylindrische Statorkammer (4) aufweist, die den Rotor (2) umgibt, und zwar zur Aufnahme eines Stators (3, 7); wobei die Statorkammer mit einem Füllmaterial (F) versehen ist und mindestens ein Expansionsabsorptionsglied (19) aufweist, das aus einem zusammendrückbaren bzw, kompressiblen Material hergestellt ist, zum Absorbieren einer thermischen Expansion des Füllmaterials (F), in dem es selbst verformt wird, um die Deformation der Statorkammer (4) zu verhindern, welche durch thermische Expansion des Füllmaterials (F) bewirkt wird, wobei das Expansionsabsorptionsglied (19) in einem Mittelbereich des Füllmaterials (F) eingebettet ist.

2. Spaltrohrmotor nach Anspruch 1, wobei das Expansionsabsorptionsglied (19) aus einem elastischen Material hergestellt ist.

3. Spaltrohrmotor nach Anspruch 2, wobei das elastische Material aus einer Gruppe bestehend aus Gummi, Polymerharz und einem geschäumten Polymerharz und einer Kombination derselben ausgewählt ist.

4. Spaltrohrmotor nach einem der Ansprüche 1 bis 3, wobei die Statorkammer (4) teilweise mit einer gasförmigen Substanz gefüllt ist, um eine Luftkammer zum Absorbieren einer thermischen Expansion des Füllmaterials (F) zu bilden.

5. Spaltrohrmotor nach einem der Ansprüche 1 bis 4, wobei das Expansionsabsorptionsglied (19) aus einer Gruppe bestehend aus einer ringförmigen Scheibe und einem Zylinder ausgewählt ist.

6. Spaltrohrmotor nach einem der Ansprüche 1 bis 5, wobei das Expansionsabsorptionsglied (19) eine Vielzahl von Teilen oder Stücken aufweist, die in dem Füllmaterial (F) verteilt ist.

7. Spaltrohrmotor nach Anspruch 6, wobei das Expansionsabsorptionsglied (19) eine Vielzahl von kugelförmigen Teilen bzw. Stücken aufweist.

## Revendications

1. Moteur à manchon d'entrefer enfermé hermétiquement dans un carter (C) comprenant un rotor (2) et une chambre statorique cylindrique (4) entourant ledit rotor (2) pour loger un stator (3, 7) ; dans lequel ladite chambre statorique (4) est remplie d'un matériau de remplissage (F) et comporte au moins un élément d'absorption de la dilatation (19) en une matière compressible pour absorber la dilatation thermique dudit matériau de remplissage (F) en se déformant lui-même de façon à empêcher la déformation de ladite chambre statorique causée par la dilatation thermique dudit matériau de remplissage (F), ledit élément d'absorption de la dilatation (13) étant incorporé dans une région située au milieu dudit matériau de remplissage (F).

2. Moteur à manchon d'entrefer selon la revendication 1, dans lequel ledit élément d'absorption de la dilatation ((19) est en une matière élastique.

3. Moteur à manchon d'entrefer selon la revendication 2, dans lequel ladite matière élastique est sélectionnée dans le groupe constitué par un caoutchouc, une résine polymère et une résine polymère alvéolée, et une combinaison appropriée de ceux-ci.

4. Moteur à manchon d'entrefer selon l'une des revendications 1 à 3, dans lequel ladite chambre statorique (4) est partiellement remplie d'une substance gazeuse de façon à former une chambre à air pour absorber la dilatation thermique dudit matériau de remplissage (F).

5. Moteur à manchon d'entrefer selon l'une des revendications 1 à 4, dans lequel ledit élément d'absorption de la dilatation (19) est sélectionné dans le groupe constitué par un disque de forme annulaire et un cylindre.

6. Moteur à manchon d'entrefer selon l'une quelconque des revendications 1 à 5, dans lequel ledit élément d'absorption de la dilatation (19) comprend une pluralité de pièces dispersées dans ledit matériau de remplissage (F).

7. Moteur à manchon d'entrefer selon la revendication 6. dans lequel ledit élément d'absorption de la dilatation (19) comprend des pièces sphériques.
